(19) Europäisches Patentamt
European Patent Office
Office européen des brevets

(11) **EP 4 653 736 A2**

(12) **EUROPEAN PATENT APPLICATION**

(43) Date of publication:
**26.11.2025** Bulletin 2025/48

(21) Application number: **25208285.4**

(22) Date of filing: **26.06.2019**

(51) International Patent Classification (IPC):
***F16L 3/22*** (2006.01)

(52) Cooperative Patent Classification (CPC):
**F25D 23/068; F16L 3/13; F16L 3/23; F16L 3/24; F16L 59/135;** F25D 2201/14; Y02A 30/242; Y02B 80/10

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2018 KR 20180074231**

(62) Document number(s) of the earlier application(s) in accordance with Art. 76 EPC:
**19825701.6 / 3 814 703**

(71) Applicant: **LG Electronics Inc.**
**Yeongdeungpo-gu**
**Seoul 07336 (KR)**

(72) Inventors:
• **KIM, Daewoong**
**08592 Seoul (KR)**

• **NAM, Hyeunsik**
**08592 Seoul (KR)**
• **LEE, Jangseok**
**08592 Seoul (KR)**

(74) Representative: **Ter Meer Steinmeister & Partner Patentanwälte mbB**
**Nymphenburger Straße 4**
**80335 München (DE)**

Remarks:
This application was filed on 13.10.2025 as a divisional application to the application mentioned under INID code 62.

(54) **VACUUM ADIABATIC BODY AND REFRIGERATOR**

(57) Provided is a vacuum adiabatic body. The vacuum adiabatic body includes a supporting unit configured to maintain an inner vacuum space part and a pipeline disposed in the vacuum space part. A pipeline is spaced apart form a third space by the supporting unit, and movement of the pipeline in a horizontal direction is restricted by the supporting unit. According to an embodiment, a heat exchange pipeline through which a refrigerant flows may be stably supported by an interaction between the spacing member and the support unit.

[Fig. 12]

## Description

### Technical Field

The present disclosure relates to a vacuum adiabatic body and a refrigerator.

### Background Art

A vacuum adiabatic body is a product for suppressing heat transfer by vacuumizing the interior of a body thereof. The vacuum adiabatic body may reduce heat transfer by convection and conduction, and hence is applied to heating apparatuses and refrigerating apparatuses. In a typical adiabatic method applied to a refrigerator, although it is differently applied in refrigeration and freezing, a foam urethane adiabatic wall having a thickness of about 30 cm or more is generally provided. However, the internal volume of the refrigerator is therefore reduced.

In order to increase the internal volume of a refrigerator, there is an attempt to apply a vacuum adiabatic body to the refrigerator.

First, Korean Patent No. 10-0343719 (Cited Document 1) of the present applicant has been disclosed. According to Reference Document 1, there is disclosed a method in which a vacuum adiabatic panel is prepared and then built in walls of a refrigerator, and the exterior of the vacuum adiabatic panel is finished with a separate molding as Styrofoam. According to the method, additional foaming is not required, and the adiabatic performance of the refrigerator is improved. However, fabrication cost is increased, and a fabrication method is complicated. As another example, a technique of providing walls using a vacuum adiabatic material and additionally providing adiabatic walls using a foam filling material has been disclosed in Korean Patent Publication No. 10-2015-0012712 (Cited Document 2). According to Reference Document 2, fabrication cost is increased, and a fabrication method is complicated.

To solve this problem, the present applicant had filed Korean Patent Application NO. 10-2013-0049495 (Cited Document 3). This technique provides a vacuum adiabatic body in an empty vacuum state without providing a separate adiabatic material therein. In addition, this technique provides a technique in which a heat exchange pipeline is disposed in the vacuum adiabatic body. The heat exchange pipeline is a pipeline in which two pipelines, i.e., an inlet pipe of an evaporator and an outlet pipe of the evaporator contact each other. The heat exchange pipeline is a pipeline in which a refrigerant flowing through the inside of the two pipelines are heat-exchanged with each other to improve performance of a refrigerating cycle.

To allow the heat exchange pipelines to be heat-exchanged only therebetween and reduce a heat loss, the heat exchange pipeline may not contact a plate defining an outer wall of the vacuum adiabatic body. For this, a ring may be inserted into the heat exchange pipeline. The ring may be disposed between the heat exchange pipeline and an inner surface of the plate to space the heat exchange pipeline from the plate.

Since an outer circumferential surface of the ring has the same shape as that of an outer circumferential surface of the heat exchange pipeline, and the ring has a closed curve shape, it is very difficult to insert the ring into the heat exchange pipeline.

The ring is made of a solid material and fully contacts the plate to support the plate. Thus, heat of the heat exchange pipeline may be conducted to a case to cause an adiabatic loss.

The ring has to be inserted into a vacuum space before the vacuum adiabatic body is assembled. Thus, after the vacuum adiabatic body is assembled, it is difficult to additionally insert the guide ring when a contact portion between the heat exchange pipeline and the plate occurs. Since the heat exchange pipeline is made of a copper material having weak rigidity and also is bent inside a spacer, it is more problematic.

Since the ring is not fixed, the ring may move from a desired position when a worker handles the heat exchange pipeline. If the ring moves, the position of the ring has to be adjusted again after being assembled.

### Disclosure of Invention

### Technical Problem

Embodiments provide a vacuum adiabatic body in which a spacing member spacing a heat exchange pipeline from a plate by a predetermined distance is easily coupled to the heat exchange pipeline.

Embodiments also provide a vacuum adiabatic body in which, when the heat exchange pipeline is supported to be spaced apart from the plate, contact between the spacing member and the plate is minimized to minimize an adiabatic loss due to thermal conductivity.

Embodiments also provide a vacuum adiabatic body in which a spacing member is installed at a required position, and then, the installed position is permanently fixed.

**Solution to Problem**

In one embodiment, a vacuum adiabatic body includes a supporting unit configured to maintain an inner vacuum space part and a pipeline disposed in the vacuum space part, wherein a pipeline is spaced apart form a third space by the supporting unit, and movement of the pipeline in a horizontal direction is restricted by the supporting unit. According to an embodiment, a heat exchange pipeline through which a refrigerant flows may be stably supported by an interaction between the spacing member and the support unit.

In another embodiment, a refrigerator includes: at least one spacing member configured to space a heat exchange pipeline disposed in an inner vacuum space part of a vacuum adiabatic body provided as a wall of the refrigerator from other members within the vacuum space part and support the heat exchange pipeline, the spacing member being made of a metal material, wherein the spacing member includes a supporting part accommodating the heat exchange pipeline therein; and at least one wing extending from the supporting part and supported by the supporting unit so as to restrict the movement of the heat exchange pipeline. According to an embodiment, the heat exchange pipeline may be supported by using the spacing member made of a metal material without outgassing.

The heat resistance unit that resists heat transfer between the plate members defining an outer wall of the vacuum adiabatic body may include a conductive resistance sheet that resists conduction of heat transferred along a wall of the vacuum space part and may further include a side frame coupled to the conductive resistance sheet.

Also, the heat resistance unit may include at least one radiation resistance sheet that is provided in a plate shape within the vacuum space part or may include a porous material that resists radiation heat transfer between the second plate member and the first plate member within the vacuum space part.

**Advantageous Effects of Invention**

According to the embodiment, since the worker directly install the spacing member at the set position without being inserted from the distal end of the heat exchange pipeline, the assembly workability may be convenient.

According to the embodiment, the number of indirect contact points between the heat exchange pipeline and the plate may be minimized to reduce the adiabatic loss of the vacuum adiabatic body.

According to the embodiment, the spacing member may be permanently fixed to the set position according to the design factors of the vacuum adiabatic body to improve the reliability of the product because the additional process is not required.

According to the embodiment, when the spacing member is additionally required by the unexpected deformation of the heat exchange pipeline made of the material such as copper, the spacing member may be conveniently installed to improve the yield of the good products.

**Brief Description of Drawings**

FIG. 1 is a perspective view of a refrigerator according to an embodiment.

FIG. 2 is a view schematically showing a vacuum adiabatic body used in a main body and a door of the refrigerator.

FIG. 3 is a view illustrating various embodiments of an internal configuration of a vacuum space part.

FIG. 4 is a diagram illustrating results obtained by examining resins.

FIG. 5 illustrates results obtained by performing an experiment on vacuum maintenance performances of resins.

FIG. 6 illustrates results obtained by analyzing components of gases discharged from a PPS and a low outgassing PC.

FIG. 7 illustrates results obtained by measuring maximum deformation temperatures at which resins are damaged by atmospheric pressure in high-temperature exhaustion.

FIG. 8 is a view showing various embodiments of conductive resistance sheets and peripheral parts thereof.

FIG. 9 is a partial cutaway view of the vacuum adiabatic body.

FIG. 10 is a view illustrating a state in which a heat exchange pipeline is disposed in the vacuum space part.

FIG. 11 is a perspective view of a spacing member according to an embodiment.

FIG. 12 is a perspective view illustrating a state in which the spacing member is installed according to the embodiment of FIG. 11.

FIG. 13 is a schematic cross-sectional view taken along line I-F of FIG. 12.

FIG. 14 is a front view of the spacing member of FIG. 11.

FIG. 15 is a perspective view of a spacing member according to another embodiment.

FIG. 16 is a perspective view illustrating a state in which the spacing member is installed according to the embodiment of FIG. 15.

FIG. 17 is a front view illustrating another example of the spacing member of FIG. 15.

FIG. 18 is a development view of a spacing member according to another embodiment.

FIG. 19 is a side view illustrating the spacing member of FIG. 18.

**Mode for the Invention**

Hereinafter, exemplary embodiments will be described with reference to the accompanying drawings. The invention may, however, be embodied in many different forms and should not be construed as being limited to the embodiments set forth herein, and a person of ordinary skill in the art, who understands the spirit of the present invention, may readily implement other embodiments included within the scope of the same concept by adding, changing, deleting, and adding components; rather, it will be understood that they are also included within the scope of the present invention.

The drawings shown below may be displayed differently from the actual product, or exaggerated or simple or detailed parts may be deleted, but this is intended to facilitate understanding of the technical idea of the present invention. It should not be construed as limited.

Also, the number of each of the components illustrated together with the drawings facilitates the understanding of the inventive concept by assigning the same or similar number to the same or similar component in function. Similarly, in the case of performing the same or similar function in function even if the embodiments are different, the same or similar number is assigned to facilitate the understanding of the invention.

In the following description, the vacuum pressure means any pressure state lower than the atmospheric pressure. In addition, the expression that a vacuum degree of A is higher than that of B means that a vacuum pressure of A is lower than that of B.

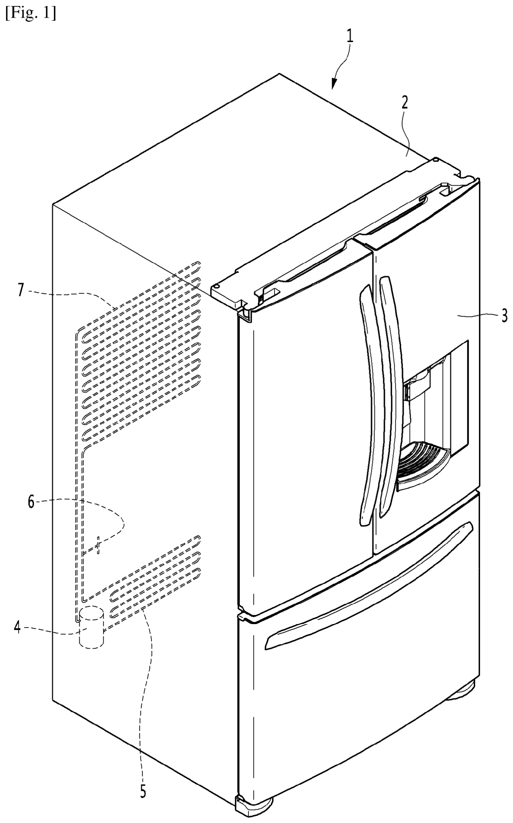

FIG. 1 is a perspective view of a refrigerator according to an embodiment.

Referring to FIG. 1, the refrigerator 1 includes a main body 2 provided with a cavity 9 capable of storing storage goods and a door 3 provided to open/close the main body 2. The door 3 may be rotatably or slidably movably disposed to open/close the cavity 9. The cavity 9 may provide at least one of a refrigerating compartment and a freezing compartment.

Parts constituting a freezing cycle in which cold air is supplied into the cavity 9. For example, the parts include a compressor 4 for compressing a refrigerant, a condenser 5 for condensing the compressed refrigerant, an expander 6 for expanding the condensed refrigerant, and an evaporator 7 for evaporating the expanded refrigerant to take heat. As a typical structure, a fan may be installed at a position adjacent to the evaporator 7, and a fluid blown from the fan may pass through the evaporator 7 and then be blown into the cavity 9. A freezing load is controlled by adjusting the blowing amount and blowing direction by the fan, adjusting the amount of a circulated refrigerant, or adjusting the compression rate of the compressor, so that it is possible to control a refrigerating space or a freezing space.

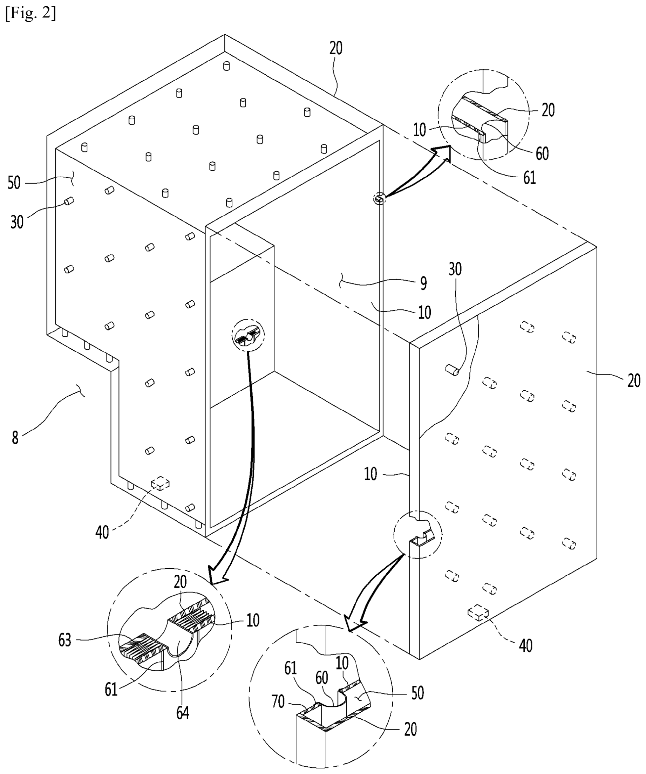

FIG. 2 is a view schematically showing a vacuum adiabatic body used in the main body and the door of the refrigerator. In FIG. 2, a main body-side vacuum adiabatic body is illustrated in a state in which top and side walls are removed, and a door-side vacuum adiabatic body is illustrated in a state in which a portion of a front wall is removed. In addition, sections of portions at conductive resistance sheets are provided are schematically illustrated for convenience of understanding.

Referring to FIG. 2, the vacuum adiabatic body includes a first plate member 10 for providing a wall of a low-temperature space, a second plate member 20 for providing a wall of a high-temperature space, a vacuum space part 50 defined as an interval part between the first and second plate members 10 and 20. Also, the vacuum adiabatic body includes the conductive resistance sheets 60 and 63 for preventing thermal conduction between the first and second plate members 10 and 20. A sealing part 61 for sealing the first and second plate members 10 and 20 is provided such that the vacuum space part 50 is in a sealing state.

When the vacuum adiabatic body is applied to a refrigerator or a warming apparatus, the first plate member 10 providing a wall of an internal space of the refrigerator may be referred to as an inner case, and the second plate member 20 providing a wall of an outer space of the refrigerator may be referred to as an outer case.

A machine room 8 in which parts providing a freezing cycle are accommodated is placed at a lower rear side of the main body-side vacuum adiabatic body, and an exhaust port 40 for forming a vacuum state by exhausting air in the vacuum space part 50 is provided at any one side of the vacuum adiabatic body. In addition, a pipeline 64 passing through the vacuum space part 50 may be further installed so as to install a defrosting water line and electric lines.

The first plate member 10 may define at least one portion of a wall for a first space provided thereto. The second plate member 20 may define at least one portion of a wall for a second space provided thereto. The first space and the second space may be defined as spaces having different temperatures. Here, the wall for each space may serve as not only a wall directly contacting the space but also a wall not contacting the space. For example, the vacuum adiabatic body of the embodiment may also be applied to a product further having a separate wall contacting each space.

Factors of heat transfer, which cause loss of the adiabatic effect of the vacuum adiabatic body, are thermal conduction between the first and second plate members 10 and 20, heat radiation between the first and second plate members 10 and 20, and gas conduction of the vacuum space part 50.

Hereinafter, a heat resistance unit provided to reduce adiabatic loss related to the factors of the heat transfer will be provided. Meanwhile, the vacuum adiabatic body and the refrigerator of the embodiment do not exclude that another adiabatic means is further provided to at least one side of the vacuum adiabatic body. Therefore, an adiabatic means using foaming or the like may be further provided to another side of the vacuum adiabatic body.

The heat resistance unit may include a conductive resistance sheet that resists conduction of heat transferred along a wall of a third space and may further include a side frame coupled to the conductive resistance sheet. The conductive resistance sheet and the side frame will be clarified by the following description.

Also, the heat resistance unit may include at least one radiation resistance sheet that is provided in a plate shape within the third space or may include a porous material that resists radiation heat transfer between the second plate member and the first plate member within the third space. The radiation resistance sheet and the porous material will be clarified by the following description.

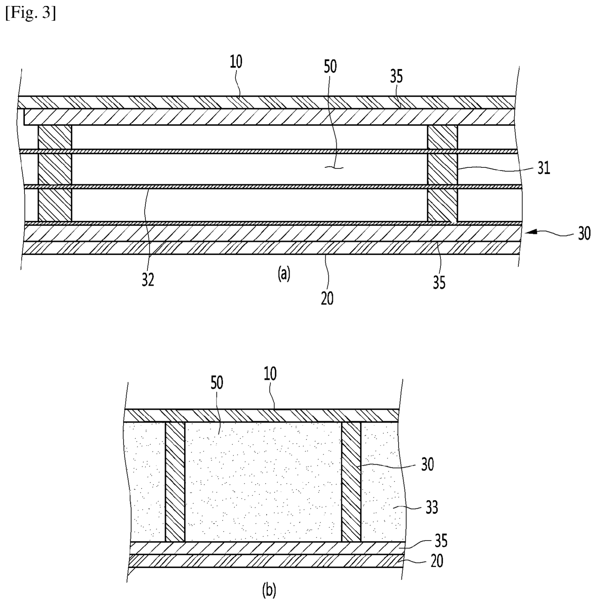

FIG. 3 is a view illustrating various embodiments of an internal configuration of the vacuum space part.

First, referring to FIG. 3A, the vacuum space part 50 may be provided in a third space having a pressure different from that of each of the first and second spaces, preferably, a vacuum state, thereby reducing an adiabatic loss. The third space may be provided at a temperature between the temperature of the first space and the temperature of the second space. Since the third space is provided as a space in the vacuum state, the first and second plate members 10 and 20 receive force contracted in a direction in which they approach each other due to a force corresponding to a pressure difference between the first and second spaces. Therefore, the vacuum space part 50 may be deformed in a direction in which a distance between the plate members is reduced. In this case, the adiabatic loss may be caused due to an increase in amount of heat radiation, caused by the contraction of the vacuum space part 50, and an increase in amount of thermal conduction, caused by contact between the plate members 10 and 20.

The supporting unit 30 may be provided to reduce deformation of the vacuum space part 50. The supporting unit 30 includes a bar 31. The bar 31 may extend in a substantially vertical direction with respect to the plate members to support a distance between the first plate member and the second plate member. A support plate 35 may be additionally provided on at least any one end of the bar 31. The support plate 35 may connect at least two or more bars 31 to each other to extend in a horizontal direction with respect to the first and second plate members 10 and 20. The support plate 35 may be provided in a plate shape or may be provided in a lattice shape so that an area of the support plate contacting the first or second plate member 10 or 20 decreases, thereby reducing heat transfer. The bars 31 and the support plate 35 are fixed to each other at at least one portion, to be inserted together between the first and second plate members 10 and 20. The support plate 35 contacts at least one of the first and second plate members 10 and 20, thereby preventing deformation of the first and second plate members 10 and 20. In addition, based on the extending direction of the bars 31, a total sectional area of the support plate 35 is provided to be greater than that of the bars 31, so that heat transferred through the bars 31 may be diffused through the support plate 35.

A material of the supporting unit 30 will be described.

The supporting unit 30 is to have a high compressive strength so as to endure the vacuum pressure. Also, the supporting unit 30 is to have a low outgassing rate and a low water absorption rate so as to maintain the vacuum state. Also, the supporting unit 30 is to have a low thermal conductivity so as to reduce the thermal conduction between the plate members. Also, the supporting unit 30 is to secure the compressive strength at a high temperature so as to endure a high-temperature exhaust process. Also, the supporting unit 30 is to have an excellent machinability so as to be subjected to molding. Also, the supporting unit 30 is to have a low cost for molding. Here, the time required to perform the exhaust process takes about a few days. Hence, the time is reduced, thereby considerably improving fabrication cost and productivity. Therefore, the compressive strength is to be secured at the high temperature because an exhaust speed is increased as a temperature at which the exhaust process is performed becomes higher. The inventor has performed various examinations under the above-described conditions.

First, ceramic or glass has a low outgassing rate and a low water absorption rate, but its machinability is remarkably lowered. Hence, the ceramic and glass may not be used as the material of the supporting unit 30. Therefore, resin may be considered as the material of the supporting unit 30.

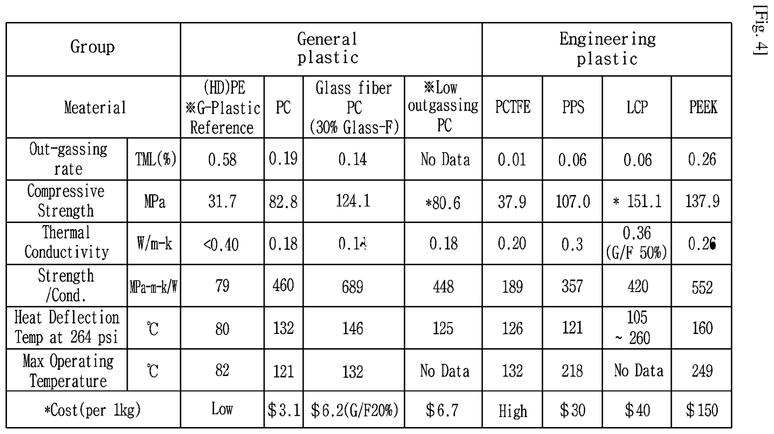

FIG. 4 is a diagram illustrating results obtained by examining resins.

Referring to FIG. 4, the present inventor has examined various resins, and most of the resins cannot be used because their outgassing rates and water absorption rates are remarkably high. Accordingly, the present inventor has examined resins that approximately satisfy conditions of the outgassing rate and the water absorption rate. As a result, PE is inappropriate to be used due to its high outgassing rate and its low compressive strength. PCTFE is not preferable to be used due to its remarkably high price. PEEK is inappropriate to be used due to its high outgassing rate. Accordingly, it is determined that that a resin selected from the group consisting of polycarbonate (PC), glass fiber PC, low outgassing PC, polyphenylene sulfide (PPS), and liquid crystal polymer (LCP) may be used as the material of the supporting unit. However, an outgassing rate of the PC is 0.19, which is at a low level. Hence, as the time required to perform baking in which exhaustion is performed by applying heat is increased to a certain level, the PC may be used as the material of the supporting unit.

The present inventor has found an optimal material by performing various studies on resins expected to be used inside the vacuum space part. Hereinafter, results of the performed studies will be described with reference to the accompanying drawings.

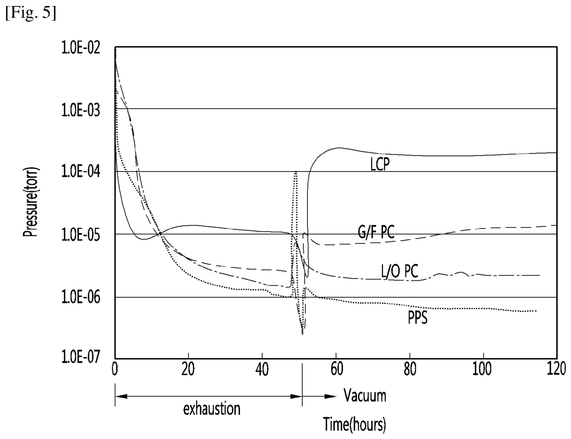

FIG. 5 is a view illustrating results obtained by performing an experiment on vacuum maintenance performances of the resins.

Referring to FIG. 5, there is illustrated a graph showing results obtained by fabricating the supporting unit using the respective resins and then testing vacuum maintenance performances of the resins. First, a supporting unit fabricated using a selected material was cleaned using ethanol, left at a low pressure for 48 hours, exposed to the air for 2.5 hours, and then subjected to an exhaust process at 90 °C for about 50 hours in a state that the supporting unit was put in the vacuum adiabatic body, thereby measuring a vacuum maintenance performance of the supporting unit.

It may be seen that in the case of the LCP, its initial exhaust performance is best, but its vacuum maintenance performance is bad. It may be expected that this is caused by sensitivity of the LCP to temperature. Also, it is expected through characteristics of the graph that, when a final allowable pressure is 5x10 3 Torr, its vacuum performance will be maintained for a time of about 0.5 year. Therefore, the LCP is inappropriate as the material of the supporting unit.

It may be seen that, in the case of the glass fiber PC (G/F PC), its exhaust speed is fast, but its vacuum maintenance performance is low. It is determined that this will be influenced by an additive. Also, it is expected through the characteristics of the graph that the glass fiber PC will maintain its vacuum performance will be maintained under the same condition for a time of about 8.2 years. Therefore, the LCP is inappropriate as the material of the supporting unit.

It is expected that, in the case of the low outgassing PC (O/G PC), its vacuum maintenance performance is excellent, and its vacuum performance will be maintained under the same condition for a time of about 34 years, as compared with the above¬ described two materials. However, it may be seen that the initial exhaust performance of the low outgassing PC is low, and therefore, the fabrication efficiency of the low outgassing PC is lowered.

It may be seen that, in the case of the PPS, its vacuum maintenance performance is remarkably excellent, and its exhaust performance is also excellent. Therefore, it is most preferably considered that, based on the vacuum maintenance performance, the PPS is used as the material of the supporting unit.

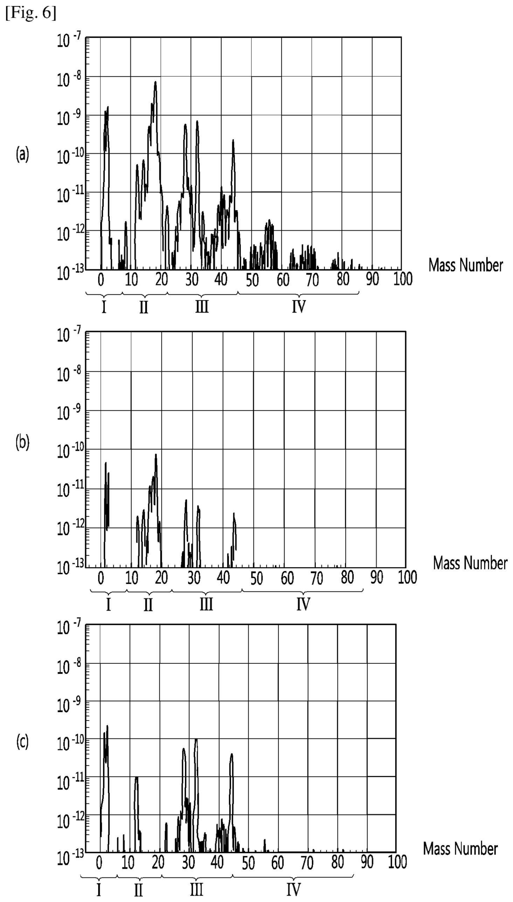

FIG. 6 illustrates results obtained by analyzing components of gases discharged from the PPS and the low outgassing PC, in which the horizontal axis represents mass numbers of gases and the vertical axis represents concentrations of gases. FIG. 6A illustrates a result obtained by analyzing a gas discharged from the low outgassing PC. In FIG. 6A, it may be seen that H2 series (I), H2O series (II), N2/CO/CO2/O2 series (III), and hydrocarbon series (IV) are equally discharged. FIG. 6B illustrates a result obtained by analyzing a gas discharged from the PPS. In FIG. 6B, it may be seen that H2 series (I), H2O series (II), and N2/CO/CO2/O2 series (III) are discharged to a weak extent. FIG. 6C is a result obtained by analyzing a gas discharged from stainless steel. In FIG. 6C, it may be seen that a similar gas to the PPS is discharged from the stainless steel. Consequently, it may be seen that the PPS discharges a similar gas to the stainless steel.

As the analyzed result, it may be re-confirmed that the PPS is excellent as the material of the supporting unit.

To further reinforce the strength of the supporting unit, a material added with glass fiber (G/F) of several tens%, preferably, G/F of 40% together with the PPS may be used. To more increase in strength of a PPS+G/F 40% material used in the supporting unit, the PPS+G/F 40% material may be further subjected to a crystallization process (left under an atmosphere of 150°C or more for about 1 hour) as a post-treatment process after injection.

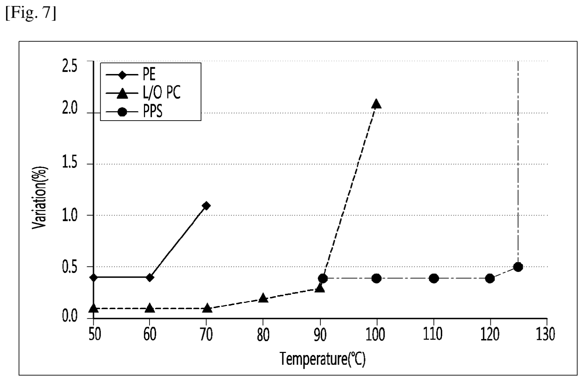

FIG. 7 illustrates results obtained by measuring maximum deformation temperatures at which resins are damaged by atmospheric pressure in high-temperature exhaustion. At this time, the bars 31 were provided at a diameter of 2 mm at a distance of 30 mm. Referring to FIG. 7, it may be seen that a rupture occurs at 60 °C in the case of the PE, a rupture occurs at 90 °C in the case of the low outgassing PC, and a rupture occurs at 125 °C in the case of the PPS.

As the analyzed result, it may be seen that the PPS is most preferably used as the resin used inside the vacuum space part. However, the low outgassing PC may be used in terms of fabrication cost.

A radiation resistance sheet 32 for reducing heat radiation between the first and second plate members 10 and 20 through the vacuum space part 50 will be described. The first and second plate members 10 and 20 may be made of a stainless material capable of preventing corrosion and providing a sufficient strength. The stainless material has a relatively high emissivity of 0.16, and hence a large amount of radiation heat may be transferred. In addition, the supporting unit 30 made of the resin has a lower emissivity than the plate members, and is not entirely provided to inner surfaces of the first and second plate members 10 and 20. Hence, the supporting unit 30 does not have great influence on radiation heat. Therefore, the radiation resistance sheet 32 may be provided in a plate shape over a majority of the area of the vacuum space part 50 so as to concentrate on reduction of radiation heat transferred between the first and second plate members 10 and 20. A product having a low emissivity may be preferably used as the material of the radiation resistance sheet 32. In an embodiment, an aluminum foil having an emissivity of 0.02 may be used as the radiation resistance sheet 32. Also, since the transfer of radiation heat may not be sufficiently blocked using one radiation resistance sheet, at least two radiation resistance sheets 32 may be provided at a certain distance so as not to contact each other. Also, at least one radiation resistance sheet may be provided in a state in which it contacts the inner surface of the first or second plate member 10 or 20.

Referring again to FIG. 3b, the distance between the plate members is maintained by the supporting unit 30, and a porous material 33 may be filled in the vacuum space part 50. The porous material 33 may have a higher emissivity than the stainless material of the first and second plate members 10 and 20. However, since the porous material 33 is filled in the vacuum space part 50, the porous material 33 has a high efficiency for resisting the radiation heat transfer.

In the present embodiment, the vacuum adiabatic body may be manufactured without the radiation resistance sheet 32.

Referring to FIG. 3C, the supporting unit 30 for maintaining the vacuum space part 50 may not be provided. A porous material 333 may be provided to be surrounded by a film 34 instead of the supporting unit 30. Here, the porous material 33 may be provided in a state of being compressed so that the interval of the vacuum space part is maintained. The film 34 made of, for example, a PE material may be provided in a state in which a hole is punched in the film 34.

In the present embodiment, the vacuum adiabatic body may be manufactured without the supporting unit 30. That is to say, the porous material 33 may perform the function of the radiation resistance sheet 32 and the function of the supporting unit 30 together.

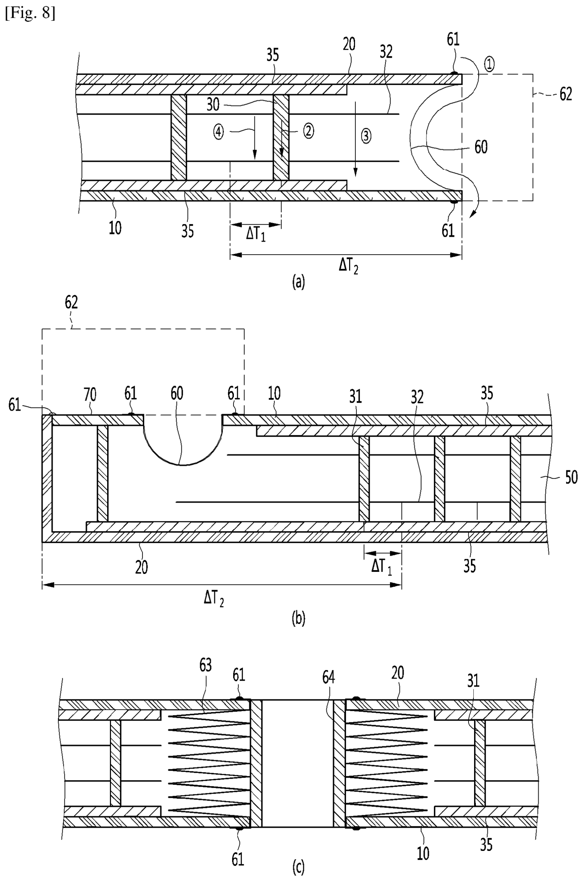

FIG. 8 is a view showing various embodiments of conductive resistance sheets and peripheral parts thereof. Structures of the conductive resistance sheets are briefly illustrated in FIG. 2, but will be understood in detail with reference to the drawings.

First, a conductive resistance sheet proposed in FIG. 8A may be preferably applied to the main body-side vacuum adiabatic body. Specifically, the first and second plate members 10 and 20 are to be sealed so as to vacuumize the interior of the vacuum adiabatic body. In this case, since the two plate members have different temperatures from each other, heat transfer may occur between the two plate members. A conductive resistance sheet 60 is provided to prevent thermal conduction between two different kinds of plate members.

The conductive resistance sheet 60 may be provided with the sealing part 61 at which both ends of the conductive resistance sheet 60 are sealed to defining at least one portion of the wall for the third space and maintain the vacuum state. The conductive resistance sheet 60 may be provided as a thin foil in unit of micrometer so as to reduce the amount of heat conducted along the wall for the third space. The sealing parts 610 may be provided as welding parts. That is, the conductive resistance sheet 60 and the plate members 10 and 20 may be fused to each other. In order to cause a fusing action between the conductive resistance sheet 60 and the plate members 10 and 20, the conductive resistance sheet 60 and the plate members 10 and 20 may be made of the same material, and a stainless material may be used as the material. The sealing parts 610 are not limited to the welding parts, and may be provided through a process such as cocking. The conductive resistance sheet 60 may be provided in a curved shape. Thus, a thermal conduction distance of the conductive resistance sheet 60 is provided longer than the linear distance of each plate member, so that the amount of thermal conduction may be further reduced.

A change in temperature occurs along the conductive resistance sheet 60. Therefore, in order to block heat transfer to the exterior of the conductive resistance sheet 60, a shielding part 62 may be provided at the exterior of the conductive resistance sheet 60 such that an adiabatic action occurs. In other words, in the refrigerator, the second plate member 20 has a high temperature and the first plate member 10 has a low temperature. In addition, thermal conduction from high temperature to low temperature occurs in the conductive resistance sheet 60, and hence the temperature of the conductive resistance sheet 60 is suddenly changed. Therefore, when the conductive resistance sheet 60 is opened to the exterior thereof, heat transfer through the opened place may seriously occur. In order to reduce heat loss, the shielding part 62 is provided at the exterior of the conductive resistance sheet 60. For example, when the conductive resistance sheet 60 is exposed to any one of the low-temperature space and the high-temperature space, the conductive resistance sheet 60 does not serve as a conductive resistor as well as the exposed portion thereof, which is not preferable.

The shielding part 62 may be provided as a porous material contacting an outer surface of the conductive resistance sheet 60. The shielding part 62 may be provided as an adiabatic structure, e.g., a separate gasket, which is placed at the exterior of the conductive resistance sheet 60. The shielding part 62 may be provided as a portion of the vacuum adiabatic body, which is provided at a position facing a corresponding conductive resistance sheet 60 when the main body-side vacuum adiabatic body is closed with respect to the door-side vacuum adiabatic body. In order to reduce heat loss even when the main body and the door are opened, the shielding part 62 may be preferably provided as a porous material or a separate adiabatic structure.

A conductive resistance sheet proposed in FIG. 8B may be preferably applied to the door-side vacuum adiabatic body. In FIG. 8B, portions different from those of FIG. 8A are described in detail, and the same description is applied to portions identical to those of FIG. 8A. A side frame 70 is further provided at an outside of the conductive resistance sheet 60. A part for sealing between the door and the main body, an exhaust port necessary for an exhaust process, a getter port for vacuum maintenance, and the like may be placed on the side frame 70. This is because the mounting of parts is convenient in the main body-side vacuum adiabatic body, but the mounting positions of parts are limited in the door-side vacuum adiabatic body.

In the door-side vacuum adiabatic body, it is difficult to place the conductive resistance sheet 60 at a front end portion of the vacuum space part, i.e., a comer side portion of the vacuum space part. This is because, unlike the main body, a corner edge portion of the door is exposed to the exterior. In more detail, if the conductive resistance sheet 60 is placed at the front end portion of the vacuum space part, the comer edge portion of the door is exposed to the exterior, and hence there is a disadvantage in that a separate adiabatic part should be configured so as to thermally insulate the conductive resistance sheet 60.

A conductive resistance sheet proposed in FIG. 8C may be preferably installed in the pipeline passing through the vacuum space part. In FIG. 8C, portions different from those of FIGS. 8A and 8b are described in detail, and the same description is applied to portions identical to those of FIGS. 8A and 8B. A conductive resistance sheet having the same shape as that of FIG. 8A, preferably, a wrinkled conductive resistance sheet 63 may be provided at a peripheral portion of the pipeline 64. Accordingly, a heat transfer path may be lengthened, and deformation caused by a pressure difference may be prevented. In addition, a separate shielding part may be provided to improve the adiabatic performance of the conductive resistance sheet.

A heat transfer path between the first and second plate members 10 and 20 will be described with reference back to FIG. 8A. Heat passing through the vacuum adiabatic body may be divided into surface conduction heat ① conducted along a surface of the vacuum adiabatic body, more specifically, the conductive resistance sheet 60, supporter conduction heat ② conducted along the supporting unit 30 provided inside the vacuum adiabatic body, gas conduction heat ③ conducted through an internal gas in the vacuum space part, and radiation transfer heat ④ transferred through the vacuum space part.

The transfer heat may be changed depending on various depending on various design dimensions. For example, the supporting unit may be changed such that the first and second plate members 10 and 20 may endure a vacuum pressure without being deformed, the vacuum pressure may be changed, the distance between the plate members may be changed, and the length of the conductive resistance sheet may be changed. The transfer heat may be changed depending on a difference in temperature between the spaces (the first and second spaces) respectively provided by the plate members. In the embodiment, a preferred configuration of the vacuum adiabatic body has been found by considering that its total heat transfer amount is smaller than that of a typical adiabatic structure formed by foaming polyurethane. In a typical refrigerator including the adiabatic structure formed by foaming the polyurethane, an effective heat transfer coefficient may be proposed as 19.6 mW/mK.

By performing a relative analysis on heat transfer amounts of the vacuum adiabatic body of the embodiment, a heat transfer amount by the gas conduction heat ③ may become smallest. For example, the heat transfer amount by the gas conduction heat ③ may be controlled to be equal to or smaller than 4% of the total heat transfer amount. A heat transfer amount by solid conduction heat defined as a sum of the surface conduction heat ① and the supporter conduction heat ② is largest. For example, the heat transfer amount by the solid conduction heat may reach 75% of the total heat transfer amount. A heat transfer amount by the radiation transfer heat ③ is smaller than the heat transfer amount by the solid conduction heat but larger than the heat transfer amount of the gas conduction heat. For example, the heat transfer amount by the radiation transfer heat ③ may occupy about 20% of the total heat transfer amount.

According to such a heat transfer distribution, effective heat transfer coefficients (eK: effective K) (W/mK) of the surface conduction heat ①, the supporter conduction heat ②, the gas conduction heat ③, and the radiation transfer heat ④ may have an order of Math Equation 1.

[Equation 1]

$$eK_{solid\ conduction\ heat} > eK_{radiation\ transfer\ heat} > eK_{gas\ conduction\ heat}$$

Here, the effective heat transfer coefficient (eK) is a value that may be measured using a shape and temperature differences of a target product. The effective heat transfer coefficient (eK) is a value that may be obtained by measuring a total heat transfer amount and a temperature at least one portion at which heat is transferred. For example, a calorific value (W) is measured using a heating source that may be quantitatively measured in the refrigerator, a temperature distribution (K) of the door is measured using heats respectively transferred through a main body and an edge of the door of the refrigerator, and a path through which heat is transferred is calculated as a conversion value (m), thereby evaluating an effective heat transfer coefficient.

The effective heat transfer coefficient (eK) of the entire vacuum adiabatic body is a value given by k=QL/A△T. Here, Q denotes a calorific value (W) and may be obtained using a calorific value of a heater. A denotes a sectional area (m²) of the vacuum adiabatic body, L denotes a thickness (m) of the vacuum adiabatic body, and △T denotes a temperature difference.

For the surface conduction heat, a conductive calorific value may be obtained through a temperature difference (△T) between an entrance and an exit of the conductive resistance sheet 60 or 63, a sectional area (A) of the conductive resistance sheet, a length (L) of the conductive resistance sheet, and a thermal conductivity (k) of the conductive resistance sheet (the thermal conductivity of the conductive resistance sheet is a material property of a material and may be obtained in advance). For the supporter conduction heat, a conductive calorific value may be obtained through a temperature difference (△T) between an entrance and an exit of the supporting unit 30, a sectional area (A) of the supporting unit, a length (L) of the supporting unit, and a thermal conductivity (k) of the supporting unit. Here, the thermal conductivity of the supporting unit is a material property of a material and may be obtained in advance. The sum of the gas conduction heat ③, and the radiation transfer heat ④ may be obtained by subtracting the surface conduction heat and the supporter conduction heat from the heat transfer amount of the entire vacuum adiabatic body. A ratio of the gas conduction heat ③, and the radiation transfer heat ④ may be obtained by evaluating radiation transfer heat when no gas conduction heat exists by remarkably lowering a vacuum degree of the vacuum space part 50.

Then a porous material is provided inside the vacuum space part 50, porous material conduction heat ⑤ may be a sum of the supporter conduction heat ② and the radiation transfer heat ④. The porous material conduction heat may be changed depending on various variables including a kind, an amount, and the like of the porous material.

According to an embodiment, a temperature difference △T₁ between a geometric center formed by adjacent bars 31 and a point at which each of the bars 31 is located may be preferably provided to be less than 0.5°C. Also, a temperature difference △T₂ between the geometric center formed by the adjacent bars 31 and an edge portion of the vacuum adiabatic body may be preferably provided to be less than 0.5°C. In the second plate member 20, a temperature difference between an average temperature of the second plate and a temperature at a point at which a heat transfer path passing through the conductive resistance sheet 60 or 63 meets the second plate may be the largest. For example, when the second space is a region hotter than the first space, the temperature at the point at which the heat transfer path passing through the conductive resistance sheet meets the second plate member becomes the lowest. Similarly, when the second space is a region colder than the first space, the temperature at the point at which the heat transfer path passing through the conductive resistance sheet meets the second plate member becomes the highest.

This means that the amount of heat transferred through other points except the surface conduction heat passing through the conductive resistance sheet should be controlled, and the entire heat transfer amount satisfying the vacuum adiabatic body may be achieved only when the surface conduction heat occupies the largest heat transfer amount. To this end, a temperature variation of the conductive resistance sheet may be controlled to be larger than that of the plate member.

Physical characteristics of the parts constituting the vacuum adiabatic body will be described. In the vacuum adiabatic body, a force by vacuum pressure is applied to all of the parts. Therefore, a material having a strength (N/m²) of a certain level may be preferably used.

Under such circumferences, the plate members 10 and 20 and the side frame 70 may be preferably made of a material having a sufficient strength with which they are not damaged by even vacuum pressure. For example, when the number of bars 31 is decreased so as to limit the support conduction heat, deformation of the plate member occurs due to the vacuum pressure, which may bad influence on the external appearance of refrigerator. The radiation resistance sheet 32 may be preferably made of a material that has a low emissivity and may be easily subjected to thin film processing. Also, the radiation resistance sheet 32 is to ensure a strength enough not to be deformed by an external impact. The supporting unit 30 is provided with a strength enough to support the force by the vacuum pressure and endure an external impact, and is to have machinability. The conductive resistance sheet 60 may be preferably made of a material that has a thin plate shape and may endure the vacuum pressure.

In an embodiment, the plate member, the side frame, and the conductive resistance sheet may be made of stainless materials having the same strength. The radiation resistance sheet may be made of aluminum having a weaker strength that the stainless materials. The supporting unit may be made of resin having a weaker strength than the aluminum.

Unlike the strength from the point of view of materials, analysis from the point of view of stiffness is required. The stiffness (N/m) is a property that would not be easily deformed. Although the same material is used, its stiffness may be changed depending on its shape. The conductive resistance sheets 60 or 63 may be made of a material having a strength, but the stiffness of the material is preferably low so as to increase heat resistance and minimize radiation heat as the conductive resistance sheet is uniformly spread without any roughness when the vacuum pressure is applied. The radiation resistance sheet 32 requires a stiffness of a certain level so as not to contact another part due to deformation. Particularly, an edge portion of the radiation resistance sheet may generate conduction heat due to drooping caused by the self-load of the radiation resistance sheet. Therefore, a stiffness of a certain level is required. The supporting unit 30 requires a stiffness enough to endure a compressive stress from the plate member and an external impact.

In an embodiment, the plate member and the side frame may preferably have the highest stiffness so as to prevent deformation caused by the vacuum pressure. The supporting unit, particularly, the bar may preferably have the second highest stiffness. The radiation resistance sheet may preferably have a stiffness that is lower than that of the supporting unit but higher than that of the conductive resistance sheet. Lastly, the conductive resistance sheet may be preferably made of a material that is easily deformed by the vacuum pressure and has the lowest stiffness.

Even when the porous material 33 is filled in the vacuum space part 50, the conductive resistance sheet may preferably have the lowest stiffness, and the plate member and the side frame may preferably have the highest stiffness.

The vacuum space part may resist to heat transfer by only the supporting unit 30. Here, a porous material 33 may be filled with the supporting unit inside the vacuum space part 50 to resist to the heat transfer. The heat transfer to the porous material may resist without applying the supporting unit.

In the above description, as a material suitable for the supporting unit, a resin of PPS has been proposed. The bar 31 is provided on the support plate 35 at intervals of 2 cm to 3 cm, and the bar 31 has a height of 1 cm to 2 cm. These resins often have poor fluidity of the resin during the molding. In many cases, the molded article does not have the designed value. Particularly, the shape of a molded product such as a bar having a short length is often not provided properly due to non-uniform injection of resin into a part far from the liquid injection port of the liquid.

This may cause damage of the supporting unit or defective vacuum adiabatic body later.

The supporting unit 30 is a substantially two-dimensional structure, but its area is considerably large. Therefore, if a defect occurs in one of the portions, it is difficult to discard the entire structure. This limitation becomes even more pronounced as refrigerators and warming apparatus are becoming larger in size to meet the needs of consumers.

The heat exchange pipeline is disposed in the internal space of the vacuum adiabatic body, i.e., the vacuum space part 50. The heat exchange pipeline may be provided by boning an inlet pipe 171 through which the refrigerant is introduced into an evaporator disposed in the refrigerator to an outlet pipe 172 through which the refrigerant is discharged from the evaporator. Two pipelines that are the inlet pipe 171 and the outlet pipe 172 may be bonded to each other through welding. The refrigerant flowing through the inlet pipe and the outlet pipe may be heat-exchanged with each other to improve efficiency of a refrigeration cycle.

An operation and configuration in a state in which the heat exchange pipeline is disposed in the vacuum space part will be described below.

First, an embodiment in which a porous material 33 is filled into the third space as illustrated in FIGS. 3B and 3C will be described. In this case, the heat exchange pipeline 117 may be inserted into the third space, and then, the porous material may be filled into the third space. Here, the porous material may be filled into a region within the third space except for the heat exchange pipeline 117 to improve adiabatic performance. Particularly, in the case of FIG. 3C, the porous material may serve to surround a position of the heat exchange pipeline 117 and also maintain an interval of the third space as the supporting unit. In this case, the position of the heat exchange pipe may be supported by the porous material, and the heat exchange pipe may not move.

Alternatively, when the porous material is processed into an object having a predetermined shape at the outside, the porous material and the heat exchange pipeline may be provided first as a single body. Thereafter, the single body of the porous material and the heat exchange pipeline may be inserted into the third space.

In the case of FIG. 3B, the vacuum space part may perform a function of fixing the position of the heat exchange pipeline and a function of the supporting unit, as well as, the supporting unit including the bar may be separately provided.

Hereinafter, as illustrated in FIGS. 3A and 3B, an operation and configuration of the heat exchange pipeline in the vacuum space part will be described as an embodiment that is applied to when the supporting unit including the bar is provided.

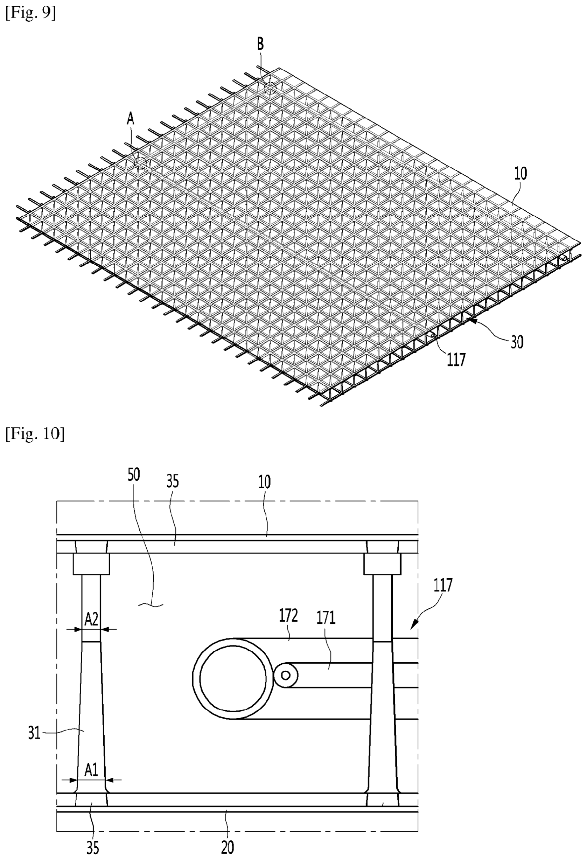

FIG. 9 is a partial cutaway view of the vacuum adiabatic body, and FIG. 10 is a view illustrating a state in which the heat exchange pipeline is disposed in the vacuum space part.

Referring to FIGS. 9 and 10, the supporting unit 30 is disposed between the plate members 10 and 20. The supporting unit 30 includes a support panel 35 contacting the plate members and at least two or more bars 31 preferably, a plurality of bars 31 maintaining an interval between the plate members 10 and 20.

Each of the bars 31 may have a lower portion greater than an upper portion thereof in the drawing. As a result, high molding processability may be secured.

It is preferable that the heat exchange pipeline 117 avoids contact with other members in the vacuum space part 50 as much as possible. When a pipeline made of a metal, for example, copper contacts the other member, heat exchange efficiency may be deteriorated due to thermal conduction, and thus, the adiabatic performance may not be realized. Particularly, the bonding between the metals of the plate member and the heat exchange pipeline may cause a large heat loss.

The heat exchange pipeline 117 may be disposed so as not to contact any member at a gap between the bars 31 in the horizontal direction in a space between the plate members 10 and 20 in the vertical direction. Thus, the occurrence of the heat loss due to the contact between the heat exchange pipeline 117 and the other member may be prevented.

The heat exchange pipeline 117 may be made of a material having relatively low rigidity, for example, copper. Thus, the heat exchange pipeline 117 may be weak against an external impact or force. When the heat exchange pipeline 117 is bent, any unintentional force in one direction may lead to deformation of the pipeline to cause contact with the internal component of the vacuum space part 50. This limitation may also be caused by an external impact. Thus, the heat exchange pipeline 117 may be supported by the other guide member.

To guide the heat exchange pipeline 117 so as to be spaced apart from other members, a spacing member is provided in the vacuum space part 50. The spacing member may be provided on a bent portion at the entire position of the heat exchange pipeline 117. The bent portion may correspond to each of areas A and B of FIG. 9.

Hereinafter, the spacing member will be described.

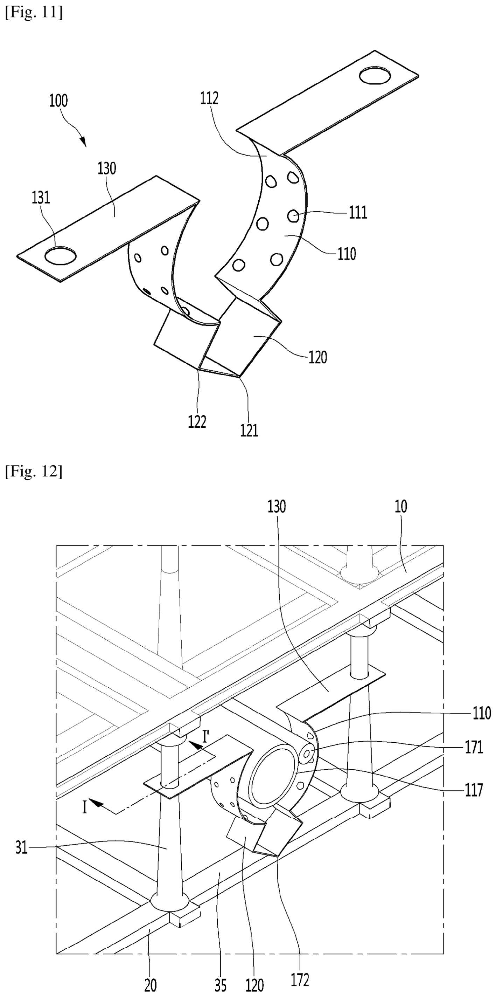

FIG. 11 is a perspective view of a spacing member according to an embodiment.

Referring to FIG. 11, the spacing member includes a supporting part 110 accommodating the heat exchange pipeline therein and a pair of wings 130 extending in both directions from an upper portion of the support part 110 so as to restrict the movement of the heat exchange pipeline 117. An insertion hole 131 into which the bar 31 is inserted may be provided in the wing 130.

The spacing member may be provided as a thin metal plate and made of thin stainless steel having a thickness of about 0.1 mm to about 0.5 mm. The stainless steel may be used to reduce outgassing within the vacuum space part and have a thin thickness to minimize conductive heat transfer amount. The spacing member 100 may be manufactured by pressing a thin plate extending in one direction. Since the spacing member 100 is made of a long plate-shaped metal in one direction, elastic deformation may be allowed in a certain range, and permanent deformation may be made when the elastic deformation limit is exceeded.

The supporting part 110 may have a smoothly bent cross-sectional shape and may be provided to surround the heat exchange pipeline 117. As a result, the movement of the heat exchange pipeline 117 in a fixed direction may be restricted by the supporting part 110. A plurality of small protrusions may be disposed on a surface of the supporting part 110. The protrusions minimize a contact area between the heat exchange pipeline 117 and the supporting part 110 through point contact to minimize heat transfer therebetween. This allows heat to be transferred only between the two pipelines constituting the heat exchange pipeline to maximize the heat exchange performance.

An upper end of the supporting part 110 is narrowed to form a recess groove 112. The recess groove 112 may be expanded by deformation of the supporting part 110, and the conductive resistance part 120 and the heat exchange pipe 117 may be inserted into the extended recess groove 112. Since the recess groove 112 is contracted in the absence of external force, the heat exchange pipeline 117 inserted once may not be removed through the recess groove 112.

The wing 130 may allow the installed position of the supporting part 110 to be supported with respect to the bar 31. For this, the wings 120 and 121 may extend up to a position at which the bar 31 is placed. That is to say, force supporting the heat exchange pipeline 117 may be provided by the bar 31. Alternatively, it may be understood that the force supporting the heat exchange pipeline 117 is provided via the supporting part 110 and the wings 120 and 121.

The bar 31 may be inserted into the insertion hole 131 so that the installation position of the spacing member 100 is supported. Since the spacing member 100 is made of a metal having small plasticity, and the bar 31 is made of a resin having high plasticity, both members may contact each other at a certain position of the insertion hole 131 and the bar 31, but this is not preferable in terms of thermal conduction. Thus, an inner diameter of the insertion hole 131 may be about 1.1 times to about 1.3 times of an outer diameter of the bar 31 at the installation position of the spacing member 100. Such a difference in size may serve to facilitate the insertion of the spacing member 100 and to support the spacing member as a slight deformation when the spacing member 100 is deformed by an external force.

The conductive resistance part 120 may be disposed on a lower portion of the supporting part 110. The conductive resistance part 120 may be narrower than each of the supporting part 110 and the wing 130 to reduce the conduction heat transfer amount. On the other hand, the supporting part 110 and the wing 130 may be provided with a larger width than that of the conduction resistance part 120 so that the heat exchange pipeline 117 supports large force.

The conductive resistance part 120 is bent in a cross-sectional shape. This is for the conductive resistance part 120 to function as a spring. In the drawings, although one bending part 122 is disposed on both left and right sides, the embodiment is not limited thereto. For example, the total of 2n+l (where n is a natural number) bending parts may be provided to perform the role of the spring against the external force in the left/ right balanced state.

A contact part 121 is disposed at the lowermost side of the conductive resistance part 120 to contact the support plate 35, thereby supporting the spacing member 100 as a whole. Here, it may be also conceivable that the spacing member 100 receives external force by the heat exchange pipeline 117. The contact part 121 may be provided together at the time of manufacturing the bending part on each of both the left and right sides as one of the bending parts 122. Since the contact part 121 is provided in a linear shape like the bending part, when the contact part 121 contacts the support plate 35, a contact area may be minimized as a linear contact part to reduce the conductive heat transfer amount.

FIG. 12 is a perspective view illustrating a state in which the spacing member is installed according to the embodiment of FIG. 11.

Referring to FIG. 12, the heat exchange pipeline 117 is seated through the expanded recess groove 112. The wing 130 is supported by the bar 31. For example, the bar 31 is inserted into the insertion hole 131. The contact part 121 may point-contact the support plate 35 to support the spacing member 100. The conductive resistance part 120 is provided to be narrower than a width of the other portion so as to suppress the thermal conduction, and a plurality of bending parts are provided to serve as springs.

The expanding action of the recess groove 112 may be restricted when the heat exchange pipeline 117 is inserted into the recess groove 112, and the wing 130 is supported by the bar 31. This is because the wing is hooked on the bar to restrict the expansion. Thus, even if the heat exchange pipeline 117 mounted once moves upward, the heat exchange pipeline 117 may be fixed without separation.

Although not shown, a radiation resistance sheet may be provided inside the vacuum space part 50, which is provided with a predetermined cutaway part so as not to contact the spacing member 100.

Various methods of installing the spacing member on the vacuum adiabatic body will be described.

A first method is as follows. First, the spacing member, the supporting unit, and the heat exchange pipeline may be assembled to manufacture an assembly. In a state in which a first plate member and a second plate member are separately temporarily assembled, the assembly is inserted into a gap between the plate members. Thereafter, a third space may be sealed from external other spaces, and then, a gas within the third space may be exhausted.

A second method is as follows. First, the spacing member, the supporting unit, and the heat exchange pipeline may be assembled to manufacture an assembly. The assembly is seated on one plate member, and the other plate member is coupled to the one plate member. Then, the third space is sealed from the external outer spaces. Then, the gas within the third space may be exhausted.

All the first method and the second method may be methods for manufacturing the assembly and performed as follows. First, the heat exchange pipeline is inserted into the spacing member. The spacing member may move to a proper position so as to be seated on the supporting member. As alternative method, the spacing member is seated on the supporting unit. The recess groove of the spacing member may be spread so that the heat exchange pipeline is inserted into the supporting part.

A third method is as follows. First, in a state in which the heat exchange pipeline is provided in one plate member, the heat exchange pipeline may be inserted into the supporting part of the spacing member. Here, the spacing member may be in the state of being coupled to the supporting unit or be coupled to the supporting unit later. Thereafter, the other plate member may be coupled to the one plate member, and the third space may be sealed from external other spaces. Then, the gas within the third space may be exhausted.

The spacing member 100 is made of a metal material and has predetermined strength. Thus, the bar 31 may be inserted into the spacing part between the supporting units together with the radiation resistance sheet so as to be coupled.

Here, the spacing member and the radiation resistance sheet may contact each other to cause thermal conduction. However, in this case, the spacing member is spaced apart from the plate member, and a bending part that line-contacts the supporting unit is provided on one side of the supporting part provided in the spacing member. Thus, there is almost no an adiabatic loss of the adiabatic space.

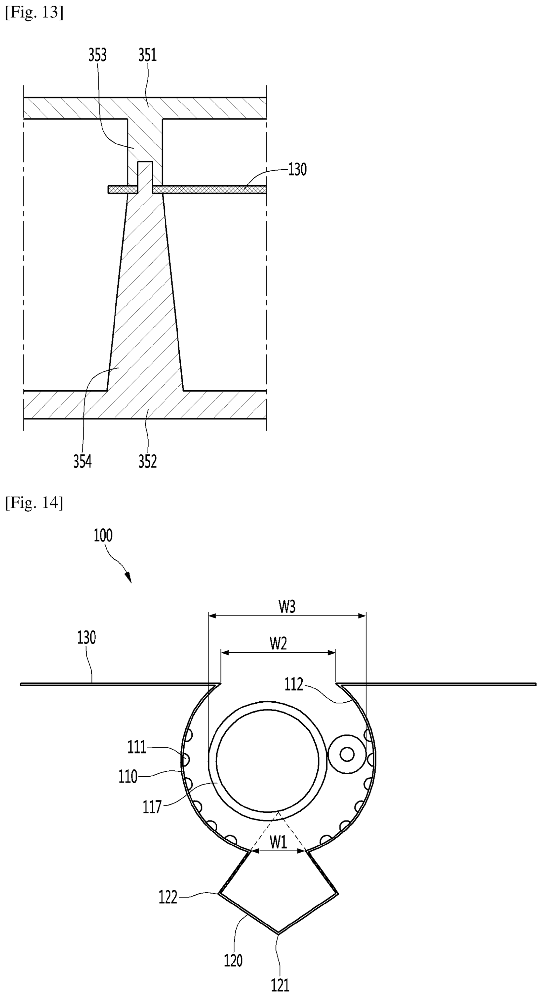

FIG. 13 is a cross-sectional view taken along line I-I' of FIG. 12.

Referring to FIG. 13, the supporting unit includes a first support plate 351 to which a first bar 353 is connected and a second support plate 352 to which a second bar is connected. Also, although the pair of bars and support plates, which are connected to each other, are shown as one body in the drawings, the embodiment is not limited thereto, and the different articles may be coupled or integrated after molding.

The first bar 353 and the second bars 354 may be coupled to each other to form one body. Here, portions coupled to each other at the end portions of the bar may provide a coupling surface. The insertion hole 131 may be supported by the coupling surface. Thus, the wing associated with the insertion hole 131 does not move in any direction of upward and downward directions due to the coupling surface provided in the gap between the first bar 353 and the second bar 354, and thus, its position may be fixed. As a result, the spacing member may not vertically move but be fixed.

FIG. 14 is a front view illustrating the spacing member of FIG. 11.

Referring to FIG. 14, since an interval w1 of a lower end of the supporting part 110 is less than an interval w3 of the heat exchange pipeline 117, the heat exchange pipeline 117 is not separated downward from the supporting part. Since an interval w2 of the recessed groove 112 is less than the interval w3 of the heat exchange pipeline 117, the heat exchange pipeline 117 is not separated upward from the supporting part.

As described above, since the heat exchange pipeline 117 does not directly contact the surface of the supporting part 110 but contacts only the protrusion 111, a contact area may be reduced. Thus, the thermal conduction between the heat exchange pipeline and the supporting part may be reduced, and the adiabatic loss of the heat exchange pipeline may be reduced. Since the inside of the vacuum space part 50 is in a vacuum state, and there is almost no convective heat transfer, the adiabatic loss of the heat exchange pipeline 117 may be most affected by the conductive heat transfer, and the influence of the conductive heat transfer is significantly reduced.

The movement of the spacing member in the downward direction according to the above embodiment may be supported by the restriction of the movement of the contact part 121 and the support plate 35, but the movement in the upward direction may be allowed. To prevent this phenomenon, other spacing part may be inserted into the bar 31 by being supported by the heat exchange pipeline 117 in a state where the other spacing member has a predetermined gap along the heat exchange pipeline 117 with the up and down direction changed. That is to say, one of the spacing members may contact the upper support plate 35 of the contact part 121, and the other spacing member spaced a predetermined distance from the spacing member may contact the lower support plate 35.

Another embodiment of the spacing member capable of eliminating the aforementioned inconvenience will be described.

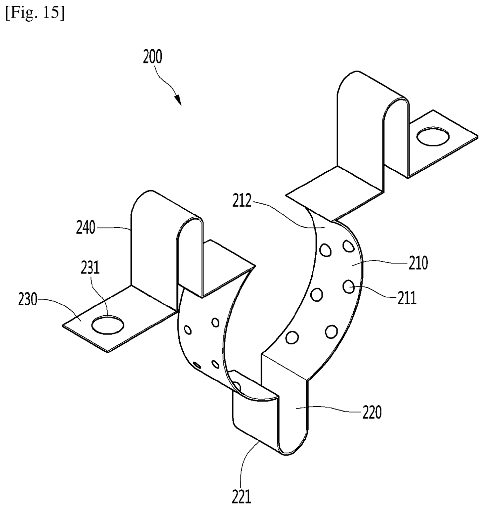

FIG. 15 is a perspective view of a spacing member according to another embodiment. This embodiment is similar to the spacing member shown in FIG. 11 and differs in that the support bending part is provided. Thus, the same portion as those of FIGS. 11 to 14 will be similarly applied to the description related to the drawings.

Referring to FIG. 15, a spacing member 210, a protrusion 211, a wing 230, an insertion hole 231, a recess groove 212, and a conductive resistance part 220 are provided in the spacing member 200 according to another embodiment and performs the same operation as those of the original embodiment.

The conductive resistance part 220 is provided with a narrow width as compared with the other portions to reduce thermal conduction and serve as a spring. The conductive resistance part 220 forms a lower support bending part 221 bent in place of the bending part 122, unlike the previous embodiment.

The lower support bending part 221 has a shape in which a long end extending downward is smoothly bent. An end portion of the lower support bending part 221 may reduce an amount of heat transferred by contacting the support plate 35.

The lower support bending part 221 does not include a bending part. When bending the metal plate, it may be difficult to obtain a bent angle to a desired angle in press processing. To solve this limitation, the bending part may have a predetermined rounded shape. The bending part may be provided in a shape having a desired shape, that is, a shape having a predetermined curvature in the press processing so that it is possible to provide the spacing member in a designed and convenient shape.

Each of the pair of wings 230 is provided with an upper support bending part 240. The upper support bending part 240 may be a member extending in a direction different from the lower support bending part 220 and may restrict the movement of the spacing member in the other direction by contacting the support plate 35.

The mounted position of the spacing member 200 may remain unchanged at the original set position of the vacuum adiabatic body by the supporting action of the support bending parts 221 and 240.

According to this embodiment, the process of installing the spacing member 200 may be more convenient.

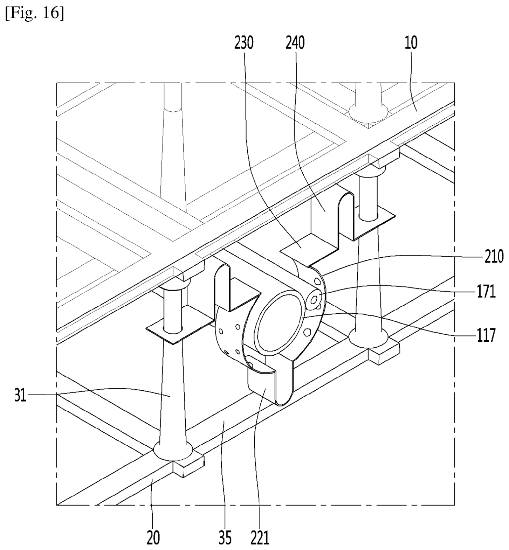

FIG. 16 is a perspective view illustrating a state in which the spacing member is installed according to the embodiment of FIG. 15.

Referring to FIG. 16, it is seen that the support bending parts 221 and 240 line contacts the upper and lower support plates 35. Thus, the movement of the spacing member 200 in the up and down directions may be absorbed by the support bending parts 221 and 240 so that the movement is restricted. The movement of the spacing member 200 in the left and right directions and the front and rear directions may be limited by the mutual support action between the wing 230 and the bar 31.

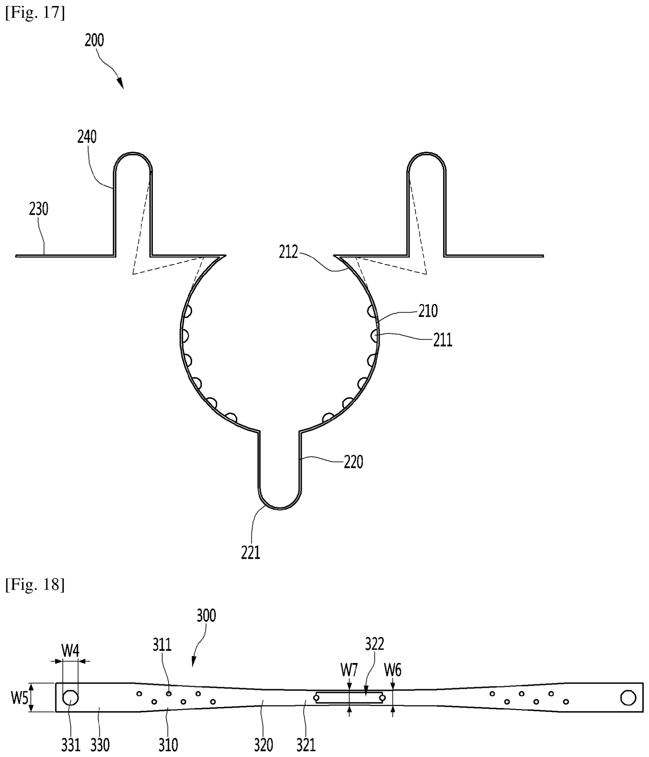

FIG. 17 is a front view illustrating another example of the spacing member of FIG. 15.

Referring to FIG. 17, the lower support bending part 221 has larger strength than the strength given by the bending part 122 of the conductive resistance part 220. Thus, it may be difficult to expand or deform the recess grooves 212 when inserting the heat exchange pipeline 117.

As a means to overcome this difficulty, the upper support bending part 240 may act. The upper support bending part 240 may be deformed as shown by a dotted line with the lower support bending part 221 when the recess groove 212 is expanded or deformed. Thus, only the lower support bending part 221 may be extended or deformed insufficiently, and the operation is facilitated.

Since the support bending parts 221 and 240 are rounded and bent, permanent deformation, that is, flat deformation may occur due to the continuous dynamic load. In this case, the contact part between the support bending parts 221 and 240 and the support plate 35 may be widened, and the thermal conduction amount may increase.

An embodiment capable of coping with deformation of the support bending parts 221 and 240 will be described below.

FIG. 18 is a development view of a spacing member according to another embodiment. Here, the development view means a plate material before being pressed.

Referring to FIG. 18, the plate member provided as the spacing member 300 according to another embodiment may further include a supporting member 310, a lower support bending member 321, a conductive resistance member 320, a protrusion 311, a wing 330, and an insertion hole 331. The portion corresponding to the upper bending part is not shown, but it may be easily provided.

A slit 322 is provided in a central portion of the spacing member 300. The support plate 35 is inserted into the slit 322. The slit 322 has a width w7 less than that w6 of the lower support bending part 321. The slit 322 extends from the inside of the lower bending part 321 in a longitudinal direction of the lower bending part 321.

Thus, an inner surface of the slit 322 line-contacts a side surface of the support plate 35. The line contact between the slit 322 and the support plate 35 may be maintained even though the lower support bending part 321 is spread in a flat shape.

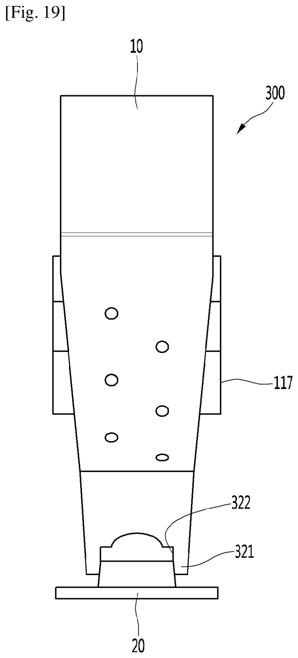

Referring to the side view in which the spacing member shown in FIG. 19 is installed, it is seen that the support plate 35 is inserted into the slit 322. Thus, a certain portion of the inner circumference of the slit 322 contacts the side surface of the support plate 35. Thus, no portion of the spacing member 300 contacts a top surface of the support plate 35.

According to the slit 322, even if the lower end of the lower support bending part 321 is flattened, the line contact length between the slit 322 and the support plate 35 only slightly increases, and the limitation of surface contact or the like does not occur. According to this, the increase in thermal conduction may be minimized or substantially eliminated, and the adiabatic loss caused by the spacing member may be reduced.

The development view according to another embodiment may be similarly applied to the original embodiment and the other embodiments when the slit 322 is not provided.

All the spacing members disclosed in this embodiment may be fixed by the supporting unit 30 without moving. For example, the bar 31 may be inserted into the insertion hole 231 provided in the spacing member, and the spacing member including the wing 230 in which the insertion hole is defined may be fixed by the supporting unit including the bar 31. Here, the spacing member may slightly move by a gap between the components.

The heat exchange pipeline 117 may be disposed within the spacing member. The heat exchange pipeline 117 may be disposed within the supporting part 110 of the spacing member and thus be fixed in position.

First fixing of the spacing member due to the supporting unit 30 and second fixing of the heat exchange pipeline due to the spacing member may be realized at the same time. According to the first fixing and the second fixing, the heat exchange pipeline 117 may be fixed by the supporting unit 30. In detail, when the heat exchange pipeline 117 is placed in the direction in which the vacuum adiabatic body extends, the vertical and horizontal movement of the heat exchange pipeline 117 may be restricted by the supporting unit.

The heat exchange pipeline 117 may be prevented from vertically moving to reduce the adiabatic loss that occurs due to the contact between the heat exchange pipeline 117 and the plate member. The horizontal movement of the heat exchange pipeline 117 may be restricted to prevent the components disposed within the third space from colliding with the heat exchange pipeline 117 when an impact is applied to the vacuum adiabatic body, thereby protecting the components within the third space.

The horizontal movement of the heat exchange pipeline 117 may be restricted to prevent the heat exchange pipeline 117 from contacting and approaching the supporting unit, i.e., the bar 31 while the vacuum adiabatic body is manufactured. Thus, the inlet pipe and the outlet pipe, which constitute the heat exchange pipeline 117, may be promoted in heat transfer therebetween, and the heat transfer between the inlet and outlet pipes and the supporting unit may be prevented to reduce the adiabatic loss. In addition, an impact applied to the supporting unit, i.e., the bar 31 due to the horizontal movement of the heat exchange pipeline 117 may be prevented to improve reliability of the vacuum adiabatic body.

**Industrial Applicability**

The present disclosure may provide the structure that is capable of reliably supporting the heat exchange pipeline as the method for more improving the adiabatic efficiency of the vacuum adiabatic body that is applied to the refrigeration cycle. Therefore, the convenient workability and the reliability of the product may be secured, and the production yield of the product may be improved.

It follows a list of examples:

1. A vacuum adiabatic body comprising: a first plate member configured to define at least a portion of a wall for a first space; a second plate member configured to define at least a portion of a wall for a second space having a temperature different from that of the first space; a sealing part configured to seal the first plate member and the second plate member so as to provide a third space that has a temperature between the temperature of the first space and the temperature of the second space and is a vacuum space; a supporting unit configured to maintain the third space; a heat resistance unit configured to reduce a heat transfer amount between the first plate member and the second plate member; an exhaust port configured to discharge a gas within the third space; and a pipeline placed in the third space, wherein movement of the pipeline in a horizontal direction is restricted by the supporting unit.

2. The vacuum adiabatic body according to example 1, further comprising a spacing member that is mode of a metal material and interposed between the pipeline and the supporting unit.

3. The vacuum adiabatic body according to example 2, wherein the supporting unit comprises a bar configured to maintain a gap between the first plate and the second plate, and the spacing member comprises: a supporting part configured to accommodate the pipeline so as to restrict the movement of the pipeline; and at least one wing extending from the supporting part so as to be hung and supported by the bar.

4. The vacuum adiabatic body according to example 3, wherein at least two wings are provided with respect to one supporting part.

5. The vacuum adiabatic body according to example 3, wherein an insertion hole into which the bar is inserted is defined in the wing.

6. The vacuum adiabatic body according to example 3, wherein the supporting unit comprises: a first support plate to which a first bar is connected; a second bar to which the first bar is coupled; and a second support plate to which the second bar is connected, wherein the insertion hole is supported by a coupling surface between the first bar and the second bar.

7. The vacuum adiabatic body according to example 3, wherein the supporting part surrounds only a portion of the pipeline.

8. The vacuum adiabatic body according to example 1, wherein the pipeline is spaced apart from the first plate member and the second plate member by the supporting unit.

9. The vacuum adiabatic body according to example 8, wherein a bending part line-contacting the supporting unit is disposed at one side of the supporting part.

10. The vacuum adiabatic body according to example 3, wherein a protrusion point-contacting the pipeline is disposed on the supporting part.

11. The vacuum adiabatic body according to example 3, wherein a conductive resistance part having a width that is less than that of the supporting part is disposed below the supporting part.

12. The vacuum adiabatic body according to example 3, wherein a support bending part at which an end portion is smoothly bent is disposed at at least one position below the supporting part and above the wing.

13. The vacuum adiabatic body according to example 12, wherein a slit extending in a longitudinal direction of the support bending part is defined in the support bending part.

14. The vacuum adiabatic body according to example 1, wherein the pipeline is a heat exchange pipeline in which two fluids are heat-exchanged with each other.

15. A refrigerator comprising: a main body configured to provide an internal space in which goods are stored; and a door provided to open and close the main body from an external space, wherein, in order to supply a refrigerant into a cavity, the refrigerator comprises: a compressor configured to compress the refrigerant; a condenser configured to condense the compressed refrigerant; an expansion device configured to expand the condensed refrigerant; an evaporator configured to evaporate the expanded refrigerant to dissipate heat; and a heat exchange pipeline in which a refrigerant outlet pipe through which a refrigerant is discharged from the evaporator and a refrigerant inlet pipe through which the refrigerant is introduced into the evaporator are heat-exchanged with each other, wherein the main body comprises a vacuum adiabatic body, and the vacuum adiabatic body comprises: a first plate member configured to define at least a portion of a wall for the internal space; a second plate member configured to define at least a portion of a wall for the external space; a sealing part configured to seal the first plate member and the second plate member so as to provide a vacuum space part that has a temperature between a temperature of the internal space and a temperature of the external space and is a vacuum space; a supporting unit configured to maintain the vacuum space part; a heat resistance unit configured to reduce heat transfer between the first plate member and the second plate member; and an exhaust port through which a gas of the vacuum space part is exhausted, wherein the heat exchange pipeline is spaced apart from other members within the vacuum space part by the supporting unit, and horizontal movement of at least the heat exchange pipeline is restricted by the supporting unit.

16. The refrigerator according to example 15, further comprising at least one spacing member that is interposed between the heat exchange pipeline and the supporting unit to directly support the heat exchange pipeline and is made of a metal material.

17. The refrigerator according to example 16, wherein the supporting unit comprises a bar configured to maintain a gap between the plate members, and the spacing member comprises: a supporting part configured to accommodate the pipeline so as to restrict the movement of the pipeline; and at least one wing extending from the supporting part, the at least one wing being supported by the bar.

18. The refrigerator according to example 15, wherein the supporting unit is made of a porous material.

19. A vacuum adiabatic body comprising: a first plate member configured to define at least a portion of a wall for a first space; a second plate member configured to define at least a portion of a wall for a second space having a temperature different from that of the first space; a sealing part configured to seal the first plate member and the second plate member so as to provide a third space that has a temperature between a temperature of the first space and a temperature of the second space and is a vacuum space; a heat resistance unit configured to reduce heat transfer between the first plate member and the second plate member; an exhaust port through which a gas of the third space is exhausted; a pipeline disposed in the third space; and a supporting unit comprising at least a porous material to maintain the third space, wherein the pipeline is spaced apart from other members within the third space by the supporting unit, and movement of the pipeline is restricted by the supporting unit.

20. The vacuum adiabatic body according to example 19, wherein the pipeline does not move.

**Claims**

1. A vacuum adiabatic body comprising:

   a supporting unit (30) configured to maintain a vacuum space part (50), the supporting unit being provided to reduce deformation of the vacuum space part (50); and
   a pipeline (117, 64) disposed in the vacuum space part (50),
   wherein a pipeline is spaced apart from another component of the vacuum space part (50) by the supporting unit (30), and movement of the pipeline in a horizontal direction is restricted by the supporting unit (30).

2. The vacuum adiabatic body according to the claim 1, further comprising a spacing member provided in the vacuum space part (50).

3. The vacuum adiabatic body according to claim 1 or 2, wherein the spacing member includes a supporting part (110) accommodating the pipeline (117) therein and a pair of wings (130) extending in both directions from an upper portion of the supporting part (110).

4. The vacuum adiabatic body according to claim 3, wherein the supporting part (110) has a smoothly bent cross-sectional shape and is provided to surround the pipeline (117).

5. The vacuum adiabatic body according to claim 3 or 4, wherein a plurality of small protrusions is disposed on a surface of the supporting part (110).

6. The vacuum adiabatic body according to any one of the claims 3 to 5, wherein an upper end of the supporting part (110) is narrowed to form a recess groove (112).

7. The vacuum adiabatic body according to any one of the claims 3 to 6, wherein the supporting unit (30) includes a bar (31), and
   wherein the wings (130) allow an installed position of the supporting part (110) to be supported with respect to the bar (31) and extend up to a position at which the bar (31) is placed.

8. The vacuum adiabatic body according to any one of the claims 3 to 7, wherein the supporting unit (30) includes a bar (31), and
   wherein an insertion hole (131) into which the bar (31) is inserted is provided in the wing (130).

9. The vacuum adiabatic body according to the claim 8, wherein the spacing member (100) is made of a metal, and the bar (31) is made of a resin, and
   wherein an inner diameter of the insertion hole (131) is about 1.1 times to about 1.3 times of an outer diameter of the bar (31) at an installation position of the spacing member (100).

10. The vacuum adiabatic body according to the claim 8 or 9, wherein the supporting unit (30) includes a first support plate (351) to which a first bar (353) is connected and a second support plate (352) to which a second bar is connected, and

    wherein the first and second bars (353, 354) are coupled to each other to form one body, portions coupled to each other at end portions of the first and second bars (353,354) provide a coupling surface, and
    wherein the insertion hole (131) is supported by the coupling surface.

11. The vacuum adiabatic body according to any one of the preceding claims, wherein the spacing member (100) is configured to guide the pipeline to be spaced apart from other member, the pipeline being a heat exchange pipeline (117).

12. The vacuum adiabatic body according to any one of the preceding claims, wherein the vacuum adiabatic body comprises a first plate member (10) providing a wall of a low-temperature space and a second plate member (20) providing a wall of a high-temperature space, and
wherein the vacuum space part (50) is defined as an interval part between the first plate member (10) and the second plate member (20);

13. The vacuum adiabatic body according to any one of the preceding claims, wherein the pipeline (64) is installed so as to install a defrosting water line and electric lines.

14. The vacuum adiabatic body according to any one of the preceding claims, further comprising a sealing part (61) configured to seal the first plate member (10) and the second plate member (20) such that the vacuum space part (50) is in a sealing state

15. A refrigerator or a warming apparatus comprising the vacuum adiabatic body according to any one of the preceding claims.

[Fig. 1]

[Fig. 2]

[Fig. 3]

(a)

(b)

[Fig. 4]

| Group | | (HD)PE ※G-Plastic Reference | General plastic | Glass fiber PC (30% Glass-F) | ※Low outgassing PC | Engineering plastic PCTFE | PPS | LCP | PEEK |
|---|---|---|---|---|---|---|---|---|---|
| Meaterial | | | PC | | | | | | |
| Out-gassing rate | TML(%) | 0.58 | 0.19 | 0.14 | No Data | 0.01 | 0.06 | 0.06 | 0.26 |
| Compressive Strength | MPa | 31.7 | 82.8 | 124.1 | *80.6 | 37.9 | 107.0 | * 151.1 | 137.9 |
| Thermal Conductivity | W/m-k | <0.40 | 0.18 | 0.14 | 0.18 | 0.20 | 0.3 | 0.36 (G/F 50%) | 0.26 |
| Strength /Cond. | MPa-m-k/W | 79 | 460 | 689 | 448 | 189 | 357 | 420 | 552 |
| Heat Deflection Temp at 264 psi | ℃ | 80 | 132 | 146 | 125 | 126 | 121 | 105 ~ 260 | 160 |
| Max Operating Temperature | ℃ | 82 | 121 | 132 | No Data | 132 | 218 | No Data | 249 |
| *Cost(per 1kg) | | Low | $3.1 | $6.2(G/F20%) | $6.7 | High | $30 | $40 | $150 |

[Fig. 5]

[Fig. 6]

[Fig. 7]

EP 4 653 736 A2

[Fig. 8]

(a)

(b)

(c)

[Fig. 9]

[Fig. 10]

[Fig. 11]

[Fig. 12]

[Fig. 13]

[Fig. 14]

[Fig. 15]

[Fig. 16]

[Fig. 17]

200

240

230

212

210

211

220

221

[Fig. 18]

300

W4

311

322

W7    W6

W5

331  330    310         320  321

[Fig. 19]

## REFERENCES CITED IN THE DESCRIPTION

**Patent documents cited in the description**

- KR 100343719
- KR 1020150012712

- KR 1020130049495